(19)

Europäisches
Patentamt
European
Patent Office
Office européen
des brevets

(11) **EP 2 482 202 A1**

(12) **EUROPEAN PATENT APPLICATION**

(43) Date of publication:
**01.08.2012 Bulletin 2012/31**

(51) Int Cl.:
***G06F 17/30*** *(2006.01)*

(21) Application number: **11152624.0**

(22) Date of filing: **28.01.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Bouadjenek, Mohamed Reda**
  **91620, Nozay (FR)**
• **Hacid, Hakim**
  **91620, Nozay (FR)**

(74) Representative: **Lebkiri, Alexandre**
  **Cabinet Camus Lebkiri**
  **87 Rue Taitbout**
  **75009 Paris (FR)**

(54) **Method for expanding user queries**

(57)     The invention relates to a method for expanding a user query (Q) of information within a telecommunication network, said query (Q) comprising a set of terms ({q1, q2, ..., qn}) manually provided by the user to the network, said user having a social profile ($p_u$) defined within said network, wherein the method comprises:
- a first step of assessing a semantic proximity between the terms of the query ({q1, q2, ..., qn}) and related terms ({qi1, qi2, ..., qil}),
- a second step of assessing a social proximity between terms of the social profile ($p_u$) of the user and said related terms,

so that the query (Q) is expanded with related terms ({qi1, qi2, ..., qil}) which satisfied both semantic and social proximities towards the terms ({q1, q2, ..., qn}) of the query (Q).

**Figure unique**

EP 2 482 202 A1

**Description**

The invention relates to a method for expanding user queries, especially by customizing said expansion according to a user social profile.

The Internet development has strongly increased the amount of information available therein. Particularly, new technologies as the "Web 2.0" allow almost any user to push information on the Internet, for instance through social platforms, collaborative tagging sites and micro-blogging sites.

In such context, searching for information - also known as information retrieval (IR) - becomes harder for Internet users since said users might not exactly know what they are searching until they find it. Also said users might not know how to formulate an efficient query since they generally ignore the indexing strategy of a data network.

In order to improve information retrieval on a telecommunication network as the Internet, it is known to expand queries whereby the user's initial query is enriched with additional information in such a way that the answer to the query may comprise more suitable results regarding the user's needs.

For example, it may be interesting to enrich a user's initial query ("Social Networks", 1) with other keywords like (("Social Networks", 1)("Web 2.0", 0.75)("Social tagging", 0.50)) thus enriching the query with terms related to the original query term, in order to retrieve a list of documents corresponding to the whole query. In the above example, the values associated to the terms represent the weight associated to each query term.

The current invention results from the finding that known query expansion methods, which are based on centralizing the expansion process on semantic basis, suffers from different limitations as lack of personalization. Indeed, different users would have, for the same queries, the same expanded terms.

The invention also results from the finding that social bookmarking platforms, also called social tagging or Folksonomy, provide with efficient ways to customize a query. Indeed, the principle behind social bookmarking platforms is to provide the user with means to annotate resources on the Web (Identified by URIs) so that these annotations (also called tags) could be shared with others.

From an IR perspective, these annotations could be seen as an indexing strategy manually performed by users. This enables the user to keep track of interesting resources and quickly access them simply by searching for the associated tags. Moreover, this can be seen as a good summary of users' topics of interests.

In order to solve the previously indicated drawbacks of the prior art, the invention provides for a query expanding method which takes into account a user specific profile in order to perform a query extension specific to each user.

More precisely, the invention relates to a method for expanding a user query of information within a telecommunication network, said query comprising a set of terms manually provided by the user to the network, said user having a social profile defined within said network, wherein the method comprises:

-    a first step of assessing a semantic proximity between the terms of the query and related terms,
-    a second step of assessing a social proximity between terms of the social profile of the user and said related terms,

So that the query is expanded with related terms which satisfied both semantic and social proximities towards the terms of the query.

Such a method delivers specific query expansions to each user. In other words, different users having different profiles achieve, for the same queries, different expanded terms according to their different profiles.

Although social platforms increase the complexity related to information retrieval, e.g., the amounts of available data, they provide an interesting opportunity for improving the IR process by incorporating the social dimension within.

Indeed a precise and accurate description of user's expectations and preferences can be captured through social data (e.g. content, social relations, social activity). Therefore, the invention uses said social data in the IR process in order to satisfy user's expectations.

In one embodiment, the method comprises a further step providing, for each term of the query, a ranking list of related terms wherein each related term ranking depends on a level of satisfaction for both semantic and social proximities towards the terms of the query.

In one embodiment, the method comprises a further step so that the social profile comprises a set of representative tags used by the user in tagging actions.

In one embodiment, the method comprises the step of having the social profile weighted through a vector {wt1, wt2, ..., wtm} whereby wti is the weight of the term ti in the user profile ($p_u$).

In one embodiment, the method comprises the step of computing an interest (denoted Interest$^u_t$) of the user u in a query term t as follows:

$$\text{Interest}^u_{t} = \frac{\sum_{ti \in pu}^{m} \text{Sim}(t,ti) \times \text{wti}}{m}$$

Where Sim(t, ti) is a similarity computed between the term t and the ith term of the user profile ti, m being the profile's length.

In one embodiment, the method comprises the step of ranking the semantic and the social assessment through an equation such as:

$$\text{Rank}^u_{ti}(tj) = \gamma \times \text{Sim}(tj, ti) + (1 - \gamma) \times \text{Interest}^u_{t}$$

where $0 \leq \gamma \leq 1$ is a parameter that controls the strength of the semantic and social parts of the assessment.

In one embodiment, the method comprises the step for a program (SER) to calculate the popularity of a bookmarking system resources according to parameters such as an amount/importance of dedicated tags, an importance, and the importance of users who interact with them.

In one embodiment, the method comprises the step to consider, as the program calculating the popularity of resources, an enhanced SPR algorithm providing three output vectors (R, U, T) representing respectively the resources, the users, and the tags popularity.

In one embodiment, the method comprises the step of defining a credibility of a user u, respectively of a resource r, as an inversely related function (-log(SER)) of the popularity of the user u, respectively of the resource r.

The invention also relates to a server for expanding a user query of information within a network, said query being a set of terms manually provided by the user to the network, a first step of assessing a semantic proximity between the terms of the query and related terms being operated in order to expand the query, wherein it further comprises means for assessing a social proximity between terms of a social profile of the user and said related terms, so that the query is expanded by related terms which satisfied to both a semantic and a social proximity towards the terms of the query.

The invention also relates to a software for expanding a user query of information within a network, said query being a set of terms manually provided by the user to the network, a first step of assessing a semantic proximity between the terms of the query and related terms being operated in order to expand the query, wherein it comprises means for assessing a social proximity between terms of the social profile of the user and said related terms so that the query is expanded by related terms which satisfied to both a semantic and a social proximity towards the terms of the query.

Reference will now be made in detail to the present preferred embodiment of the invention, an example of which is illustrated in the accompanying figure which represents a social bookmarking system treated by a server implementing the invention.

In this preferred description of an invention embodiment, the retrieval scenario comprises:

(i) a set U of users u (102, 104) with a social profile $p_u$ associated to each user $u \in U$, whereby each profile $p_u$ is a set of representative terms (or tags) that the user u used in tagging actions, and
(ii) a user query Q of a user u, said query Q being a set of terms {q1, q2, ..., qn} that approximates the user u search expectations.

By treating the query Q according to the invention, a server 106 according to the invention provides to an user u (102 in this example), for each term qi of the query Q, a ranking list of related terms ({qi1, qi2, ..., qil}) optimizing a compromise between user's 102 expectations and network capacity to expand the query Q.

For that purpose, a server 106 according to the invention transforms a query Q into a new query Q' such that:

(i) Q is included in Q', and
(ii) the results of Q are included in those of Q', and
(iii) the obtained results with Q' should increase the results accuracy and do not decrease the user's satisfaction.

To reach these results, the query Q is assessed by taking into account both a semantic link - between the query terms qi and the related terms qij - and a social link - between the related terms qij and the user profile $p_u$.

In other words, to provide social and personalized expansions of queries, the invention computes the interest of a user u to a query related term t as a similarity between its user's profile $p_u$ and said related term t.

In this embodiment, a user profile is modeled as a weighted vector $p_u$ = {wt1, wt2, ..., wtm}, where wti is the weight of the term ti in the user profile. A computed similarity translates the interest of the user u in the query term t

(denoted Interest$^u_t$), said interest being given by the following equation:

$$\text{Interest}^u_t = \frac{\sum_{ti \in pu}^{m} \text{Sim}(t,ti) \times \text{wti}}{m}$$

Where Sim(t, ti) is a similarity computed between the term t and ti (the ith term of the user profile) and m the profile's length.

According to other embodiments of the invention, different similarity measures can be used for computing Sim (t,ti). However, and in order to consider specific constraints in this approach, a specific similarity measure is taken into account.

Indeed, many measures of similarity are known in folksonomy, as the matching similarity, the overlap similarity, the Jaccard similarity, the dice similarity or the cosine similarity.

Nevertheless most of these similarity measures consider the nodes of a social bookmarking (or social network) 108 in the same manner (i.e., reasoning on its nodes in a uniform fashion). In this preferred embodiment, it appears interesting to implement that process nodes differently, for instance according to their type or available information about these nodes, to optimize the use of social information.

For instance, it is interesting to take into account the credibility of entities that link tags so that entities that are credible would be more likely to judge the strength of links.

Similarly, it is interesting to consider the type of the node linking two tags when measuring the similarity between said tags. Indeed, the resources (Websites wwdailymotion.com, www.aljazeera.com and www.youtube.com) and users (102, 104) that may link tags ("News", "Video", "Web") should be considered separately and therefore, give place to two types of links, i.e., links of users 110 and links of documents.

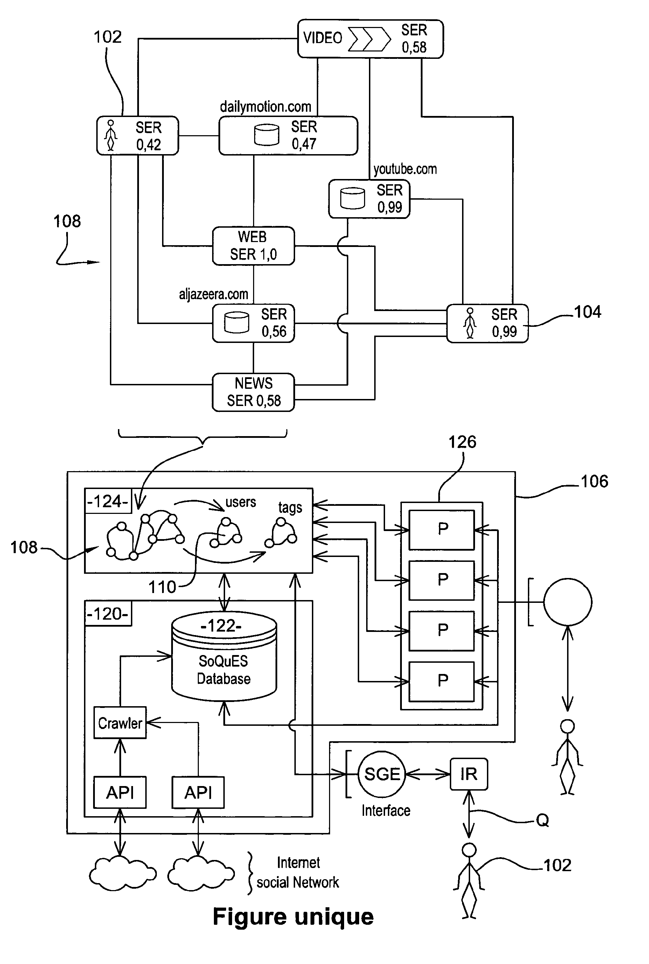

For that purpose, the initial graph 108 of a social network, as illustrated in figure 1, is transformed into three sub-graphs:

(i) resources sub-graph,
(ii) users sub-graph 102, and
(iii) tags sub-graph (i.e., folksonomy) 104.

Furthermore, this step is not limited only to a simple decomposition of the initial graph but computes a similarity between nodes of the same type. It depends mainly on the popularity of the nodes, of different type, which relate the two concerned nodes.

In this embodiment two nodes of the same type are linked in the sub-graphs if they share at least one node, of different type, in the initial graph. This similarity calculation works as a recall since it is a ratio of the rate of common nodes between two nodes and the union of their neighboring nodes. As an example, on Figure 1, to compute the similarity between the two tags "video" and "Web", the method relies on the entities (of a different type) in between these two tags, i.e. the users 102 and 104 and the resource dailymotion.com.

As previously indicated, the similarity between two terms tj and ti - with respect to a user u - is conditioned by two main features:

(i) the similarity between ti and tj, i.e. the semantic strength between the two terms, and
(ii) the similarity between tj and the user profile $p_u$, which is computed as in Equation 1. Said tag/user similarity expresses the extent to which a tag tj is likely to be interesting to a considered user, said extent being considered as a social part in the information retrieval operation.

Once these two similarities are computed, a merge operation is performed to obtain a final ranking value that indicates the similarity between related term tj and query term ti with respect to the user u.

Several aggregation methods and algorithms, which already exist, might perform such merger. In this embodiment, the Weighted Borda Fuse (WBF) algorithm is implemented, as summarized in Equation 2, where $0 \leq \gamma \leq 1$ is a parameter that controls the strength of the semantic and social parts of the assessment.

$$\text{Rank}^u_{ti}(tj) = \gamma \times \text{Sim}(tj, ti) + (1 - \gamma) \times \text{Interest}^u_t \quad (2)$$

Equation 2 provides also a ranked list of terms, which are semantically related to a query term ti, and socially to the user u.

In order to further customize the expanding method, all the participating entities in the considered social network, i.e., users, tags, and resources are given a weight that indicates their importance, or their popularity.

A known technique in this area, as is Social Page Rank or "SPR" might be considered. SPR has been proposed to calculate the popularity of resources (i.e., Web pages) in a bookmarking system, according to the amount of tags they have, their importance, and the importance of users who interact with them.

In this embodiment, SPR is enhanced in order to compute the popularity of all nodes of a social graph. Said enhanced SPR is called thereafter Social Entity Rank or "SER".

The principle with such SER algorithm is a mutual enhancement relation among popular resources, up-to-date users and hot social annotations. Moreover, the SER algorithm provides three output vectors, namely: R, U and T representing resources, users, and tags popularity respectively which might be applied to deal with said categories.

For instance, according to Shannon's information theory, sharing a very popular user or document may signal a weak association. Thus, a credibility of a user u (resp. resource r) is defined as - log(SER(u)), where SER(u) is the popularity of the user u (resp. resource r) given with SER.

Inspired from the Jaccard similarity, this embodiment of the invention aggregates the tripartite social graph over documents, compute the similarity, then aggregate the tripartite social graph over user and compute the similarity as follows:

$$Le(ti, tj) = \frac{\sum_{e \in N(ti) \cap N(tj)} Min(\omega(ti,e), \omega(tj,e)) \; X (- \log(SER(e)))}{\sum_{e \in N(ti) \cup N(tj)} Min(\omega(ti,e), \omega(tj,e)) \; X (- \log(SER(e)))}$$

(3) where Le(ti, tj) is the similarity between two tags computed by aggregation over entities of type e, i.e., either documents or users, and N(ti) is the set of tags in the direct neighborhood of ti (resp. tj). Finally, in a same way as in Equation 2, a WBF method might be used to merge resources and user links. This merge is summarized in Equation 4, where $0 \le \alpha \le 1$:

$$Sim(ti, tj) = \alpha \; X \; Ldocuments + (1 - \alpha) \; X \; Lusers \quad (4)$$

wherein Sim(ti, tj) calculates the similarity between two tags relying on the two other types of nodes - i.e., user and resource - while $\alpha$ represents the importance one wants to give for the two additional types in the consideration of the similarity calculation. As an example, if the similarity is calculated between two tags, a user may want to give a higher importance to users sharing these tags than documents having this tag as a common tag.

The effective social query expansion is summarized in the following algorithm 1.

Algorithm 1
Require: A Social folksonomy Graph G
u : a User. Q : a Query.

1: Pu[m] ← extract profile of u from G
2: for all ti ∈ Q do
3: I ← list of neighbor of ti in tag graph $G_{tag}$ (see the model used in [10])
4: for all tj ∈ I do
5: tj.Value ← $Rank^u_{ti}$ (tj) (see equation 2)
6: Sort I according to tj. Value and let only the top k terms in I
7: Make a logical OR (∨) connection between ti and all terms of I,
8: Update Q'
9: return Q'

Wherein:

Line 1 relates to getting the user's profile, which is assumed to be the set of representative tags used by the user in the folksonomy (Line 1), the purpose being to expand each term ti of a query Q with related terms (Line 2). Then, all the neighboring tags tj of ti are got from a tag graph Gt (line 3), which is an aggregation over documents (ressources) and users.

In line 4 is computed, for each tj, the ranking value that indicates its similarity with ti with respect to the user u (line 5). Next, the neighbor list have to be sorted according to the value of Rank[tj] and let only the k top tags (line 6). Finally, ti and its remaining neighbors must be linked with the OR (V) logical connector (line 7) and updated in Q'.

As an example, if a user u issues a query Q = t1 t2 ... tn, said query Q is expanded to become Q'=(t1V t11V ...V t1 m) (t2V t21 V ...V t2m) ... (tnV tn1 V ...V tnm), where tnm is a term that is semantically related to tn and socially to the user u, i.e. to its profile $p_u$.

It might be important to determine optimal values of the parameters for which best results are obtained through the invention. To this end, hereafter are described the three parameters intended to be fixed therefore:

1. γ: which allows to control the semantic part and the social part in the ranking equation (2). The higher its value is, stronger is the semantic part in term rank similarity, and vice versa.

2. α: which allows to give either a higher importance to documents or to users, in the case of calculating tag similarity. The higher its value is, the stronger are the resources links, and thus weaker the users links are (see Equation 4).

3. The third parameter is the number of tags required to operate the expansion, said parameter depending on the accuracy/delay of the operation.

To summarize, this preferred embodiment performs four main steps:

- Entities weighting: the different entities (users, resources, tags) are given a weight capturing their importance in the ecosystem.
- Graph decomposition: the initial graph representation of the social network is transformed to three sub-graphs (wherein the nodes are users, resources or tags) capturing the similarities between nodes of the same type.
- Profiles construction: a profile is associated with each user considering its activities and the activities of socially close users. This profile is constructed on the fly according to the initiated query.
- Effective query expansion: the effective expansion operation where the initial query is transformed to a new one by associating new tags which are similar to the initial tag and of interest to the user.

The invention can be implemented according to different embodiments. Indeed, the invention can be easily integrated into any social bookmarking system simply by redirecting an initial query.

In this embodiment, the server 106 is composed of different modules performing the different steps described in the previous section: The main components of the server are:

(i) a set 120 of connectors, crawlers and a database storing the data. Said connectors and crawlers enable access to the social data - usually stored in distant servers of the Internet - through open APIs offered by social bookmarking systems. The result of this step is a database 122 storing the initial social graph which contains the tagging history of each user.

(ii) a data modeling engine 124 responsible for managing the social graph 108 and performing entities weighting and graph decomposition. The output of this module is a set of three sub-graphs with the associated similarities between nodes of the same type and the importance of each node in the overall system.

(iii) a set 126 of calculation engines P each performing a specific action. Indeed this module 126 comprises a set of processors responsible for online query processing so as to rewrite the query by ensuring a calculation of an optimal path between a user's personal profile and the query dynamic profile.

**Claims**

1. Method for expanding a user query (Q) of information within a telecommunication network, said query (Q) comprising a set of terms ({q1, q2, ..., qn}) manually provided by the user to the network, said user having a social profile ($p_u$) defined within said network, wherein the method comprises:

- a first step of assessing a semantic proximity between the terms of the query ({q1, q2, ..., qn}) and related terms ({qi1, qi2, ..., qil}),
- a second step of assessing a social proximity between terms of the social profile ($p_u$) of the user and said related terms,

so that the query (Q) is expanded with related terms ({qi1, qi2, ..., qil}) which satisfied both semantic and social proximities towards the terms ({q1, q2, ..., qn}) of the query (Q).

2. Method according to claim 1 wherein it comprises a further step providing, for each term (qi) of the query (Q), a ranking list of related terms ({qi1, qi2, ..., qil}) wherein each related term ranking depends on a level of satisfaction for both semantic and social proximities towards the terms ({q1, q2, ..., qn}) of the query (Q).

3. Method according to claim1 or 2 wherein it comprises a further step so that the social profile ($p_u$) comprises a set of representative tags used by the user in tagging actions.

4. Method according to claim 3 wherein it comprises the step of having the social profile ($p_u$) weighted through a vector {wt1, wt2, ..., wtm} whereby wti is the weight of the term ti in the user profile ($p_u$).

5. Method according to claim 4 wherein it further comprises the step of computing an interest (denoted $Interest^u_t$) of the user u in a query term t as follows:

$$Interest^u_t = \frac{\sum_{ti \in pu}^{m} Sim(t,ti) \times wti}{m}$$

Where Sim(t, ti) is a similarity computed between the term t and the $i^{th}$ term of the user profile ti, m being the profile's length.

6. Method according to claim 5 wherein it comprises the step of ranking the semantic and the social assessment through an equation such as:

$$Rank^u_{ti}(tj) = \gamma \times Sim(tj, ti) + (1 - \gamma) \times Interest^u_t \ (2)$$

where $0 \leq \gamma \leq 1$ is a parameter that controls the strength of the semantic and social parts of the assessment.

7. Method according to claim 5 or 6 wherein it comprises the step for a program (SER) to calculate the popularity of a bookmarking system resources according to parameters such as an amount/importance of dedicated tags and/or the importance of users who interact with them.

8. Method according to the claim 7 wherein it comprises the step to consider, as the program calculating the popularity of resources, an enhanced SPR algorithm providing three output vectors (R, U, T) representing respectively the resources, the users, and the tags popularity.

9. Method according to claim 8 wherein it comprises the step of defining a credibility of a user u, respectively of a resource r, as an inversely related function (-log(SER)) of the popularity of the user u, respectively of the resource r.

10. Server (106) for expanding a user query of information within a network, said query being a set of terms ({q1, q2, ..., qn}) manually provided by the user to the network, a first step of assessing a semantic proximity between the terms of the query ({q1, q2, ..., qn}) and related terms ({qi1, qi2, ..., qil}) being operated in order to expand the query, wherein it further comprises means for assessing a social proximity between terms of a social profile ($p_u$) of the user and said related terms ({qi1, qi2, ..., qil}), so that the query is expanded by related terms which satisfied to both a semantic and a social proximity towards the terms ({q1, q2, ..., qn}) of the query.

11. Software for expanding a user query of information within a network, said query being a set of terms ({q1, q2, ..., qn}) manually provided by the user to the network, a first step of assessing a semantic proximity between the terms of the query ({q1, q2, ..., qn}) and related terms ({qi1, qi2, ..., qil}) being operated in order to expand the query, wherein it comprises means for assessing a social proximity between terms of a social profile ($p_u$) of the user and said related terms ({qi1, qi2, ..., qil}) so that the query is expanded by related terms which satisfied to both a semantic and a social proximity towards the terms ({q1, q2, ..., qn}) of the query.

**Figure unique**

EP 2 482 202 A1

| Europäisches Patentamt European Patent Office Office européen des brevets | EUROPEAN SEARCH REPORT | Application Number EP 11 15 2624 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIAOJIAN LI ET AL: "Research on Personalized Query Optimization Service in E-learning System", MULTIMEDIA INFORMATION NETWORKING AND SECURITY, 2009. MINES '09. INTERNATIONAL CONFERENCE ON, IEEE, PISCATAWAY, NJ, USA, 18 November 2009 (2009-11-18), pages 10-13, XP031594513, ISBN: 978-0-7695-3843-3 * page 10, right-hand column * * page 12, right-hand column - page 13, left-hand column * ----- | 1-11 | INV. G06F17/30 |
| X | XIAOJIAN LI ET AL: "Personalized Query Expansion Based on Semantic User Model in E-learning System", FUZZY SYSTEMS AND KNOWLEDGE DISCOVERY, 2009. FSKD '09. SIXTH INTERNATIONAL CONFERENCE ON, IEEE, PISCATAWAY, NJ, USA, 14 August 2009 (2009-08-14), pages 314-318, XP031584591, ISBN: 978-0-7695-3735-1 * page 315, left-hand column * * page 317, left-hand column * * page 318, right-hand column * ----- -/-- | 1-11 | |

TECHNICAL FIELDS SEARCHED (IPC)

G06F

The present search report has been drawn up for all claims

| Place of search | Date of completion of the search | Examiner |
|---|---|---|
| Munich | 28 June 2011 | Michalski, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

9

# EUROPEAN SEARCH REPORT

Application Number

EP 11 15 2624

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | Bouadjenek M R ET AL: "Une Nouvelle Approche Sociale d'Expansion de Requêtes dans le Web 2.0", COnférence en Recherche d'Infomations et Applications - CORIA 2011, 8th French Information Retrieval Conference, Avignon, France, March 16-18, 2011. Proceedings. Éditions Universitaires d'Avignon 2011, 18 March 2011 (2011-03-18), pages 41-48, XP002645405, CORIA 2011, Avignon, France ISBN: 978-2-35768-024-1 Retrieved from the Internet: URL:http://asso-aria.org/coria/2011/41.pdf [retrieved on 2011-06-24] * the whole document *<br><br>----- | 1-11 | |
| | | | **TECHNICAL FIELDS SEARCHED (IPC)** |

The present search report has been drawn up for all claims

| Place of search | Date of completion of the search | Examiner |
|---|---|---|
| Munich | 28 June 2011 | Michalski, Stéphane |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

  .........................................................................

& : member of the same patent family, corresponding
   document

EPO FORM 1503 03.82 (P04C01)